# EUROPÄISCHE PATENTSCHRIFT

(11) **EP 2 416 171 B1**
(45) Veröffentlichungstag und Bekanntmachung des Hinweises auf die Patenterteilung: **19.09.2012**
(21) Anmeldenummer: 11171579.3
(22) Anmeldetag: 27.06.2011
(51) Int. Cl.: G01S 7/497, G01S 17/93

(54) **Optoelektronischer Sensor**
Optoelectronic sensor
Capteur optoélectronique

(30) Priorität: 06.08.2010 DE 102010036883
(43) Veröffentlichungstag der Anmeldung: 08.02.2012
(73) Patentinhaber: SICK AG, 79183 Waldkirch (DE)
(72) Erfinder: Klein, Michael, 79183 Waldkirch (DE)
(74) Vertreter: Hehl, Ulrich

(56) Entgegenhaltungen:
- DE-A1- 4 340 756
- DE-A1- 19 652 441
- GB-A- 2 424 272
- US-B1- 6 691 003

## Beschreibung

Die Erfindung betrifft einen optoelektronischen Sensor mit einem Vorausfallmeldeausgang sowie ein Verfahren zum Überwachen eines Überwachungsbereichs mit Ausgabe eines Vorausfallmeldesignals nach Anspruch 1 beziehungsweise 8.

Optoelektronische Sensoren werden häufig eingesetzt, um ein Schaltsignal entsprechend der Anwesenheit oder Abwesenheit eines Objekts in ihrem Überwachungsbereich auszugeben. Beispielsweise werden solche Sensoren an einem Förderband montiert und sind an eine Steuerung angeschlossen, um das Schalt- beziehungsweise Objektfeststellungssignal weiterzuverarbeiten.

Ein einfacher derartiger Sensor ist eine Lichtschranke, wo sich ein Lichtsender und ein Lichtempfänger gegenüberstehen und der Empfänger das ausbleibende Lichtsignal bei Unterbrechung durch ein Objekt registriert. Lichtschranken sind statt als Einweg- auch als Reflexionslichtschranken bekannt. Hierbei sind Lichtsender und Lichtempfänger auf derselben Seite einem Reflektor gegenüber montiert.

Lichttaster oder Reflexionstaster ähneln von ihrem Grundaufbau einer Reflexionslichtschranke, nur fehlt es hierbei an dem kooperativen Reflektor. Lichttaster senden somit ihr Sendelicht in den offenen Raum, und es wird zurückgeworfen und registriert, wenn es dort auf ein Objekt fällt. Bekannt sind neben energetischen Tastern, welche die Intensität des Empfangssignals bewerten, auch Triangulationstaster. Durch die Lage der optischen Achsen des Lichtsenders und eines ortsauflösenden Lichtempfängers in einem Winkel zueinander, und aus der Lage des empfangenen Lichtflecks auf dem ortsauflösenden Lichtempfänger wird die Distanz eines erfassten Objekts trianguliert.

Durch fortgesetzten Betrieb, Alterung oder sonstige Einflüsse kann sich im Laufe der Zeit die Einsatzfähigkeit der Sensoren beeinträchtigen. Mögliche Ursachen sind Verschmutzungen der optischen Elemente, beispielsweise von Linsen oder einer Frontscheibe, eine Abnahme der Leistungsfähigkeit des Lichtsenders oder eine Dejustierung des optischen Strahlengangs. Dies kann zu einer fehlerhaften Detektion führen, bei der fälschlich ein nicht vorhandenes Objekt im Überwachungsbereich angezeigt oder umgekehrt ein Objekt übersehen wird.

Um derartige Fehler zu vermeiden und das Bedienpersonal der Anlage zumindest rechtzeitig im Voraus zu warnen, werden Sensoren mit einer Vorausfallmeldefunktionalität versehen, bei der sie sich selber testen oder getestet werden, um einen wahrscheinlichen Ausfall in der näheren Zukunft zu erkennen. Über sogenannte Vorausfallmeldeausgänge geben die Sensoren diese Warnung, eine Vorausfallmeldung, an die Anlagensteuerung weiter.

Ein herkömmlich verwendetes Beispielkriterium für das Auslösen einer Vorausfallmeldung ist, wenn der Empfangspegel unter einen bestimmten kritischen Grenzwert gefallen ist. Dies funktioniert für Lichtschranken einigermaßen verlässlich, denn der durchgehende Lichtstrahl beziehungsweise der Reflektor ermöglicht bei Abwesenheit von Objekten eine stete Referenzmessung des Empfangspegels. Solange die zu erfassenden Objekte nur sehr geringe Kontrastschwankungen aufweisen, erkennt auch ein Lichttaster einen drohenden Ausfall anhand des dann recht gleichmäßigen Empfangspegels. Diese Voraussetzung an die Objekte ist aber in der Praxis selten gegeben.

Deshalb sieht der Stand der Technik vor, den Verschmutzungs- oder Vorausfallmeldeausgang zu setzen, sobald der Empfangspegel für eine gewisse Mindestverweildauer bei Abwesenheit von Objekten, also ohne zu schalten, unter eine Verschmutzungsschwelle fällt. Alternativ wird gezählt, ob der Empfangspegel zu häufig in einen Bereich zwischen Schaltschwelle und Verschmutzungsschwelle eintritt. Dabei wird jeweils die Mindestverweildauer beziehungsweise der Zähler zurückgesetzt, sobald der Empfangspegel zumindest kurzzeitig oberhalb der Verschmutzungsschwelle liegt, weil bei diesem hohen Empfangspegel angenommen wird, dass alle optischen Wege in Ordnung sind.

Die Folge dieses Vorgehens ist, dass der Vorausfallmeldeausgang nicht zuverlässig und rechtzeitig anspricht. Dazu sollen zwei Beispiele betrachtet werden. Im ersten Beispielfall wird der Sensor eingesetzt, um bedrucktes Papier oder bedruckte Kartons mit Hell-Dunkel-Kontrasten zu erfassen. Bei verschmutztem Sensor sinkt der Empfangspegel auf dunkleren Bereichen unter die Verschmutzungsschwelle. In den helleren Bereichen wird die Verschmutzungsschwelle aber wieder überschritten, somit Mindestverweildauer oder Verschmutzungszähler wieder zurückgesetzt, und es kommt zu keiner Vorausfallmeldung.

Im zweiten Beispielfall werden relativ homogene Objekte erfasst, die jedoch voneinander abweichen, etwa schwarze und gelbe Kisten. Bewegen sich die Objekte relativ schnell, so entspricht dieser Fall mit raschen Hell-Dunkel-Übergängen dem ersten Beispielfall. Aber auch wenn die Objekte jeweils lange genug in dem Erfassungsbereich des Sensors verbleiben, um die Mindestverweildauer zu erreichen, so spricht zwar der Vorausfallmeldeausgang auf die dunkleren Objekte an, wird jedoch beim nächsten helleren Objekt sofort wieder zurückgesetzt. Eine zuverlässige Vorausfallwarnung wird also in keinem Fall erzielt.

Die DE 20 2007 001 932 U1 beschreibt einen Sensor zur Erkennung eines Objekts mit einem Vorausfallmeldeausgang. Auf die Problematik unzuverlässiger Vorausfallerkennung bei kontrastreichen Objekten geht die DE 20 2007 001 932 U1 aber nicht ein.

Aus der DE 196 52 441 A1 ist ein Laserscanner in einer definierten Szenerie eines mit einer Referenzfläche begrenzten Überwachungsbereichs bekannt, der eine Verschmutzung seines Austrittsfensters erkennt. Dazu wird vorab ein Mindestpegel anhand eines Schwarzziels definiert. Da die Referenzfläche stets für eine ausreichende Remission sorgt, kann das Nichterreichen dieses Mindestpegels in einem Winkelbereich im Betrieb auf eine Verschmutzung des Austrittsfensters zurückgeführt werden. In einer Ausführungsform wird verlangt, dass die Verschmutzung über einen bestimmten Zeitraum, vorzugsweise über eine vorgegebene Anzahl von Abtastperioden registriert wird.

Die US 6,691,003 B3 befasst sich mit einem Fahrassistenzsystem, welches eine Zustandsbestimmung eines Fahrzeugs anhand mehrerer Indikatoren vornimmt. Daraus wird anhand von Wahrscheinlichkeiten abgeleitet, ob ein Radar- oder Lidarsensor zur Erfassung anderer Fahrzeuge funktionsfähig oder beispielsweise wegen Verschmutzung ausgefallen ist.

In der GB 2 424 272 A wird ein System zur Erkennung eines Fehlerzustands eines Abstandssensors für Fahrzeuge offenbart. Dabei wird geprüft, ob der maximale und minimale Empfangspegel in einem vorgegebenen Zeitfenster um mindestens einen vorgegebenen Pegelabstand voneinander variiert. Ansonsten wird angenommen, dass die Erkennungsempfindlichkeit wegen Verschmutzung in einem zu starken Maße abgenommen hat.

Ein Laserscanner gemäß DE 43 40 756 A1 weist zusätzlich zu dem eigentlichen Lichtsender für die Abtastung des Überwachungsbereichs eine Vielzahl von Leuchdioden auf, welche die Frontscheibe an verschiedenen Stellen durchdringen. Der gegenüber in Empfangsdioden gemessene Pegel wird mit einer Soll-Empfangsstärke verglichen, um Verschmutzungen der Frontscheibe zu erkennen.

Es ist daher Aufgabe der Erfindung, die Vorausfallmeldung eines gattungsgemäßen Sensors bei Erfassung kontrastreicher Objekte zu verbessern.

Diese Aufgabe wird durch einen Sensor mit einem Vorausfallmeldeausgang gemäß Anspruch 1 beziehungsweise ein Verfahren zum Überwachen eines Überwachungsbereichs mit Ausgabe eines Vorausfallmeldesignals gemäß Anspruch 7 gelöst. Dabei geht die erfindungsgemäße Lösung von dem Grundgedanken aus, als Verschmutzungskriterium das zu lange Andauern eines Verschmutzungszustands und/oder das zu häufige Eintreten in einen Verschmutzungszustand zu bewerten. Dabei wird aber im Gegensatz zum Stand der Technik nicht angenommen, dass keine Verschmutzung vorliegt, sobald kurzzeitig genug Empfangspegel vorhanden ist und der Sensor sich somit außerhalb des Schalt- und Verschmutzungszustands befindet. Dies könnte nämlich auch Ergebnis eines hellen Objektbereichs bei fortdauernder Verschmutzung sein. Stattdessen wird die Verschmutzungsdauer auch über mehrere unterbrochene Phasen des Verschmutzungszustands aufaddiert beziehungsweise die Häufigkeit des Eintretens in den Verschmutzungszustand auch über solche Phasen hinweg gezählt. Für das Zurücksetzen bei aktiver Vorausfallmeldung wird die Dynamik der Objektkontraste berücksichtigt.

Die Erfindung hat den Vorteil, dass der tatsächliche Verschmutzungszustand ungeachtet von Änderungen des Empfangssignals aufgrund von Kontrasten der Objekte an dem Vorausfallmeldeausgang ausgegeben wird. Damit spricht der Vorausfallmeldeausgang auch bei Objekten wie bedrucktem Papier oder Objekten mit ähnlichen Hell-Dunkel- oder sogar Schwarz-Weiß-Kontrasten zuverlässig und rechtzeitig an. Dies ist besonders dann nützlich, wenn überwiegende Anteile des Tastguts aufgrund guter Remission mit ausreichend Signalreserve detektiert werden, aber geringe Anteile wegen schlechter Remission das Verschmutzungskriterium erfüllen. Auch in dieser Situation wird eine verlässliche Vorausausfallmeldung erzeugt, so dass die Anteile des Tastguts mit geringer Remission ebenfalls verlässlich erkannt werden oder der Sensor zumindest rechtzeitig vorwarnt.

Das Schaltkriterium ist bevorzugt das Unterschreiten des Empfangssignals einer Schaltschwelle und das Verschmutzungskriterium das Unterschreiten des Empfangssignals einer Verschmutzungsschwelle oberhalb der Schaltschwelle. Mit solchen Schwellbewertungen lassen sich die Signalreserven sehr einfach und zuverlässig bewerten. Dabei können die Schwellen prinzipiell anders herum angeordnet sein, sie werden dann überschritten statt unterschritten. Diese Situation liegt beispielsweise bei einer Negierung des Empfangssignals vor. Sprachlich wird in dieser Beschreibung zwischen diesen völlig gleichwertigen Fällen nicht unterschieden, und es sind jeweils beide alternative Situationen gemeint.

Der Verschmutzungszustand liegt bevorzugt vor, wenn das Empfangssignal zwischen der Schaltschwelle und der Verschmutzungsschwelle liegt, wobei der Verschmutzungszustand eintritt, wenn die Verschmutzungsschwelle, nicht jedoch die Schaltschwelle unterschritten wird, oder wenn die Schaltschwelle überschritten wird, ohne die Verschmutzungsschwelle zu überschreiten. Dabei liegt der Verschmutzungszustand vor, solange der Sensor in diesem Zustand verweilt. Dies ist beispielsweise der Fall, während sich das Empfangssignal im Zwischenbereich oberhalb der Schaltschwelle und unterhalb der Verschmutzungsschwelle befindet. Dagegen tritt der Verschmutzungszustand jeweils ein, wenn der Sensor in den Verschmutzungszustand übergeht. Dazu gibt es zumindest zwei Möglichkeiten. Ein zuvor starkes Empfangssignal oberhalb der Verschmutzungsschwelle kann unter diese Verschmutzungsschwelle abfallen, ohne jedoch so weit abzusinken, dass auch geschaltet wird. Die zweite Möglichkeit, in den Verschmutzungszustand einzutreten, liegt dann vor, wenn das Empfangssignal aus dem Schaltzustand unterhalb der Schaltschwelle herauskommt, dabei aber die Verschmutzungsschwelle nicht übersteigt.

Die Auswertungseinheit ist bevorzugt dafür ausgebildet, die Vorausfallmeldung nicht mehr auszugeben, wenn über eine Rücksetzmindestdauer weder ein Schaltsignal an dem Schaltausgang ausgegeben wird noch der Verschmutzungszustand vorliegt. Nach einer solchen andauernden Phase mit genug Empfangspegel wird keine Vorausfallmeldung mehr ausgegeben, der Vorausfallmeldeausgang also zurückgesetzt. Die erforderliche Rücksetzmindestdauer ist sehr applikationsabhängig, insbesondere von der typischen Helligkeitsdynamik zu erfassender Objekte und typischen Verweildauern in dem Erfassungsbereich des Sensors. Denkbare Größenordnungen reichen zum Beispiel von 100ms bei relativ kleinen oder kontraststarken, schnell bewegten Objekten bis hin zu 30s bei größeren oder kontrastarmen, langsameren Objekten.

Die Auswertungseinheit ist bevorzugt dafür ausgebildet, für die Rücksetzmindestdauer nur Phasen zu werten, in denen das Empfangssignal um mehr als einen Mindestrauschpegel schwankt. Damit wird verhindert, dass der Verschmutzungsausgang zurückgesetzt wird, wenn sich das Tastgut nicht bewegt und momentan ein heller Objektbereich von dem Sensor erfasst wird. Bei genügend Signaldynamik, die oberhalb einem erwarteten Rauschpegel des Sensors liegt, ist ein Stillstand des Objekts ausgeschlossen. Wenn trotzdem ein ausreichend starkes Empfangssignal erfasst wird, kann dies nicht dem zufälligen Verharren auf einem hellen Objektpunkt geschuldet sein, und das Zurücksetzen des Vorausfallmeldeausgangs ist berechtigt.

Die Auswertungseinheit ist bevorzugt dafür ausgebildet, die Rücksetzmindestdauer auch über Unterbrechungen hinweg aufzuaddieren, in denen das Schaltkriterium erfüllt ist. Während des Schaltens ist das Empfangssignal wegen des erfassten Objekts unabhängig von einem Verschmutzungszustand sehr gering. Solche Phasen ändern deshalb gemäß dieser Ausführungsform nichts daran, dass eine einmal begonnene Rücksetzmindestdauer nach Beendigung des Schaltzustands weitergezählt wird. Dabei darf sich das Empfangssignal aber nicht in den Bereich zwischen Schaltschwelle und Verschmutzungsschwelle bewegen, denn dies könnte wiederum ein Zeichen für zu wenig Signalreserve sein.

Der Sensor ist bevorzugt als Lichttaster ausgebildet ist, insbesondere als energetischer Reflexionstaster oder als Triangulationstaster. Lichtschranken können alternativ auch den ständigen ununterbrochenen Strahl als Referenz verwenden. Deshalb ist die Erfindung für Lichttaster besonders vorteilhaft, bei denen keine solche Referenz vorhanden ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Sensors;
- Fig. 2: eine Darstellung des Empfangssignals über der Zeit zur Erläuterung der Toleranzdauer;
- Fig. 3: eine Darstellung des Empfangssignals über der Zeit zur Erläuterung des Verschmutzungszustands nach Schaltereignissen;
- Fig. 4: eine Darstellung des Empfangssignals über der Zeit zur Erläuterung des Verschmutzungszustands ohne Schaltereignis;
- Fig. 5: eine Darstellung des Empfangssignals über der Zeit zur Erläuterung des Zurücksetzens des Vorausfallmeldeausgangs in einer Situation ohne Schaltereignisse; und
- Fig. 6: eine Darstellung des Empfangssignals über der Zeit zur Erläuterung des Zurücksetzens des Vorausfallmeldeausgangs in einer Situation mit Schaltereignissen.

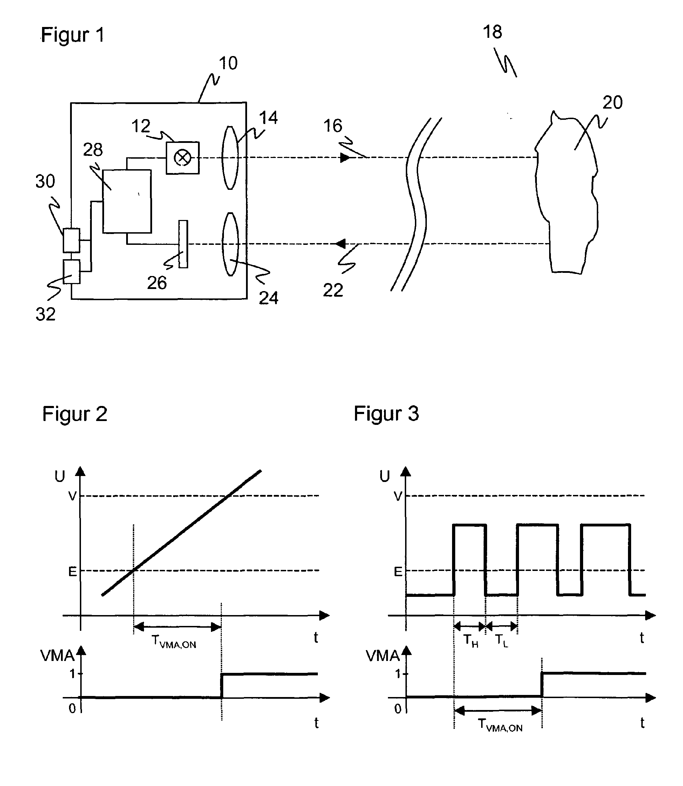

Figur 1 zeigt eine schematische Schnittdarstellung eines erfindungsgemäßen Sensors 10. Ein Lichtsender 12 mit einer Lichtquelle, bei der es sich beispielsweise um eine LED oder eine Laserlichtquelle handelt, sendet über eine Sendeoptik 14 ein Lichtbündel 16 in einen Überwachungsbereich 18 aus. Trifft das Lichtbündel 16 auf ein Objekt 20 in dem Überwachungsbereich 18, so wird ein Teil des Lichtbündels 16 remittiert oder reflektiert und kehrt als Empfangslicht 22 zu dem Sensor 10 zurück. Eine Empfangsoptik 24 lenkt das Empfangslicht 22 auf einen Lichtempfänger 26, wo das Empfangslicht 22 in ein elektronisches Empfangssignal umgewandelt wird. Der Lichtempfänger 26 ist beispielsweise als Photodiode ausgebildet. Handelt es sich bei dem Sensor 10 um einen Triangulationstaster, so ist der Lichtempfänger 26 ortsauflösend, umfasst also zumindest eine Zeile von einzelnen Empfangspixeln, wie in einem CCD- oder CMOS-Bildsensor.

Eine Steuer- und Auswertungseinheit 28 ist mit dem Lichtsender 12 und dem Lichtempfänger 26 verbunden. Die Auswertungseinheit erkennt anhand des Empfangssignals, ob sich ein Objekt 20 in dem Überwachungsbereich 18 befindet oder nicht. Das Ergebnis dieser Objekterkennung wird als Schaltsignal auf einem Schaltausgang 30 ausgegeben. Eine einfache beispielhafte Möglichkeit zur Auswertung besteht darin, das Empfangssignal mit einer Schaltschwelle zu vergleichen und immer dann zu schalten, wenn der Empfangspegel unter die Schaltschwelle fällt.

Die Auswertungseinheit 28 erkennt außerdem in einer im Zusammenhang mit den Figuren 2 bis 6 weiter unten näher erläuterten Weise anhand des Empfangssignals, ob genügend Signalreserve zur Verfügung steht oder ob ein Ausfall oder eine Beeinträchtigung der Erkennungsleistung des Sensors droht. Ist das der Fall, wird über einen Vorausfallmeldeausgang 32 eine als Vorausfallmeldung bezeichnete Warnung ausgegeben.

Der Sensor 10 ist in einer typischen Anwendung an einem Überwachungsbereich 12 montiert, in dem sich Objekte 20 relativ zu dem Sensor 10 bewegen, etwa an einem Förderband. Die Objekte 20 treten in den Überwachungsbereich 12 ein und werden von dem Sensor 10 erfasst, der entsprechend das Objektfeststellungssignal an dem Schaltausgang 30 ausgibt. Ist der Schaltausgang 30 mit einer übergeordneten Steuerung verbunden, so können an dem erfassten Objekt 20 weitere Bearbeitungsschritte eingeleitet werden, beispielsweise eine Bearbeitungsmaschine oder eine Sortierung ausgelöst werden.

Figur 2 zeigt ein erstes beispielhaftes Empfangssignal des Lichtempfängers 26 als Diagramm der Spannung über der Zeit. Die Spannung ist dabei nur eine beispielhafte Größe, um die Intensität des Empfangspegels zu messen. Manche Sensoren 10 messen auch nicht direkt die Intensität des Empfangslichts 22, sondern ein Differenzsignal. In solchen Fällen ist dann dieses effektive, der Schwellbewertung zum Schalten zugrunde gelegte Empfangssignal gemeint.

Als einfaches Verschmutzungskriterium prüft die Auswertungseinheit 28, ob sich das Empfangssignal nach Überschreiten der Schaltschwelle E länger als eine Toleranzzeit T_{VMA},_{ON} von beispielsweise 2 Sekunden in einem Verschmutzungszustand zwischen der Schaltschwelle E und einer oberhalb der Schaltschwelle E befindlichen Verschmutzungsschwelle V befindet. Sobald der Verschmutzungszustand länger als die Toleranzzeit T_{VMA},_{ON} anhält, wird der Vorausfallmeldeausgang 32 aktiviert, wie im unteren Teil der Figur 2 anhand des binären Signals VMA veranschaulicht.

Figur 3 zeigt ein weiteres beispielhaftes Empfangssignal, wobei diese und die weiteren Darstellungen jeweils analog aufgebaut sind wie die Figur 2. Das Empfangssignal wechselt hier mehrfach zwischen dem Schaltzustand, der jeweils für eine Zeit T_{H} anhält, und einem höheren Empfangspegel, der jeweils eine Zeit T_{L} anhält und bei dem der Schaltausgang 30 nicht geschaltet ist, wobei der höhere Empfangspegel aber jeweils unterhalb der Verschmutzungsschwelle V bleibt. Ein solches Empfangssignal tritt auf, wenn der Sensor 10 verschmutzt ist und nacheinander mehrere Objekte 20 erfasst.

Die Auswertungseinheit 28 schaltet den Vorausfallmeldeausgang 32, sobald die Gesamtzeit, in welcher sich das Empfangssignal zwischen Schaltschwelle E und Verschmutzungsschwelle V befindet, die zulässige Toleranzdauer T_{VMA,ON} übersteigt. Dabei kann die Dauer zwischenzeitlicher Schaltzustände T_{L} mitgewertet oder ausgeblendet werden.

Alternativ wird gezählt, wie oft der Übergang von dem Schaltzustand unterhalb der Schaltschwelle E in den Verschmutzungszustand zwischen Schaltschwelle E und Verschmutzungsschwelle V stattfindet. Sobald dies häufiger geschieht als eine Toleranzanzahl, wird der Sensor 10 als verschmutzt angesehen. Beide Kriterien können auch vermischt werden, d.h. es wird geprüft, wie oft und/oder wie lange der Verschmutzungszustand auftritt, oder es werden bei der Häufigkeit nur solche Ereignisse gezählt, in denen der Verschmutzungszustand eine gewisse Mindest- beziehungsweise Höchstdauer anhält.

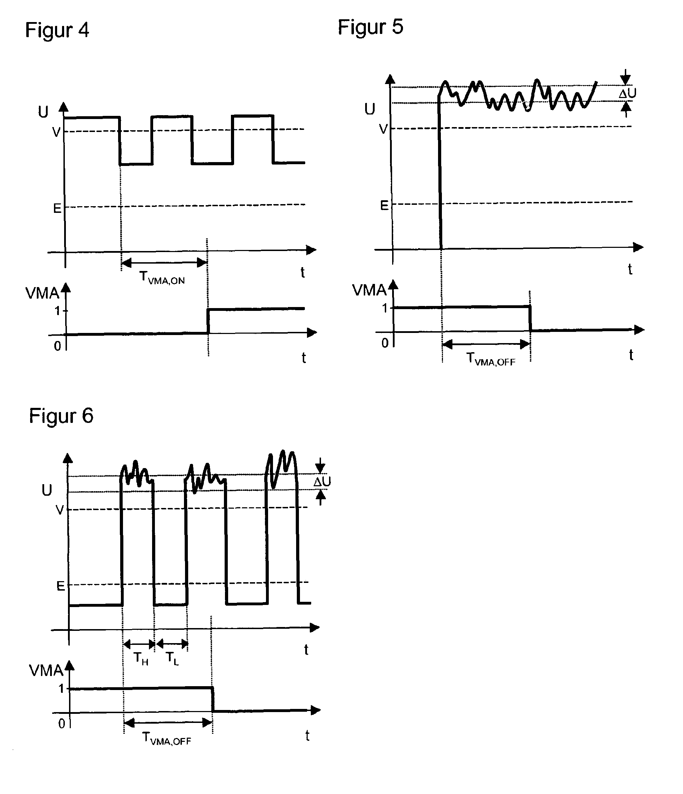

Figur 4 zeigt einen anderen beispielhaften Verlauf des Empfangssignals, welches wiederholt die Verschmutzungsschwelle V unterschreitet, ohne mit Durchbrechen der Schaltschwelle E auch ein Schaltereignis auszulösen. Ein solches Empfangssignal wird an Hell-Dunkel-Übergängen bei einem Sensor 10 erfasst, der wegen Verschmutzung dunkle Objektbereiche nicht mehr mit hinreichender Signalreserve erfasst. Die Kriterien zur Erkennung der Verschmutzung sind ganz ähnlich wie in Figur 3. Es wird bewertet, ob der Verschmutzungszustand länger anhält als die Toleranzdauer T_{VMA},_{ON} und/oder ob das Empfangssignal zu häufig in den Verschmutzungszustand unterhalb der Verschmutzungsschwelle V, aber oberhalb der Schaltschwelle E eintritt. Die zwischenzeitliche Überschreitung der Verschmutzungsschwelle V führt dabei aber nicht zu einem Zurücksetzen der gemessenen Dauer des Verschmutzungszustands oder der gezählten Eintritte in den Verschmutzungszustand. Die Auswertungseinheit 28 geht damit nicht davon aus, dass eine zwischenzeitliche Erholung des Empfangspegels ein Zeichen für einen unbeeinträchtigten Lichtweg ist, sondern nimmt lediglich zwischenzeitliche hellere Objektbereiche an.

Die in den Figuren 3 und 4 veranschaulichten Kriterien werden bevorzugt gleichzeitig angewandt. Die Auswertungseinheit 28 misst somit die aufaddierte Gesamtzeit, die sich das Empfangssignal in dem Verschmutzungszustand zwischen Schaltschwelle E und Verschmutzungsschwelle V befindet, und/oder sie zählt, wie oft der Verschmutzungszustand eintritt. Dabei wird über Zwischenphasen hinweggemessen beziehungsweise -gezählt, in denen der Empfangspegel unter die Schaltschwelle E sinkt oder die Verschmutzungsschwelle V übersteigt.

Anhand der Figuren 5 und 6 wird abschließend erläutert, wie der Sensor 10 den Vorausfallmeldeausgang 32 wieder zurücksetzt, beispielsweise nachdem eine Frontscheibe gereinigt wurde oder sobald der Überwachungsbereich wieder frei von Störpartikeln ist, wie Staub oder dergleichen.

Dazu wird, wie in Figur 5 gezeigt, eine Zeitmessung gestartet, sobald das Empfangssignal die Verschmutzungsschwelle V überschreitet. Hält dies für mehr als eine Rücksetzmindestdauer T_{VMA,OFF} an, wird der Vorausfallmeldeausgang 32 zurückgesetzt, also von der binären Eins auf die binäre Null gesetzt. Die Rücksetzmindestdauer T_{VMA},_{OFF} ist wie die Toleranzdauer T_{VMA},_{ON} anwendungsspezifisch zu wählen. Bei schnellen Vorgängen, wie in einer Druckmaschine, sind kürzere Dauern erforderlicher als beispielsweise in der Fördertechnik.

Um auszuschließen, dass das Überschreiten der Verschmutzungsschwelle lediglich einem zufälligen Verharren über einem besonders hellen Objektbereich geschuldet ist, wird außerdem überprüft, ob eine ausreichende Signaldynamik vorliegt. Dazu wird ein Korridor mit einem Mindestrauschpegel ΔU, etwa einem festgelegten Prozentsatz des Empfangssignals oder der Verschmutzungsschwelle V, um das Empfangssignal gelegt und gefordert, dass das Empfangssignal mindestens in diesem Maße schwankt. Durch dieses Vorgehen wird verhindert, das der Vorausfallmeldeausgang 32 zurückgesetzt wird, wenn sich das Tastgut nicht bewegt und sich ein heller Kontrast im Strahlengang befindet. Wenn sich nämlich das Tastgut bewegt, gibt es selbst auf visuell homogen erscheinenden Objekten zumindest geringfügige Signalschwankungen.

Figur 6 zeigt das Zurücksetzen des Vorausfallmeldeausgangs 32 bei einem Empfangssignal, bei dem im Gegensatz zur Figur 5 noch innerhalb der Rücksetzmindestdauer T_{VMA},_{OFF} Schaltereignisse auftreten. Ein solches Schaltereignis unterbricht die Zeitmessung. Sie wird entweder neu gestartet, wenn das Empfangssignal erneut die Verschmutzungsschwelle V überschreitet, oder die Zeitmessung addiert mehrere Phasen auf, in denen die Verschmutzungsschwelle V überschritten ist.

Damit ist erfindungsgemäß ermöglicht, die Vorausfallmeldung auch bei Objekten 20 mit Hell-Dunkel-Schwankungen zuverlässig und rechtzeitig auszugeben sowie den Vorausfallmeldeausgang 32 ebenso zuverlässig zurückzusetzen, wenn die Störung nicht mehr vorliegt.

## Patentansprüche

1. Optoelektronischer Sensor (10) mit einem Lichtsender (12) zum Aussenden eines Lichtsignals (16) in einen Überwachungsbereich (18), einem Lichtempfänger (26) zum Empfangen und Umwandeln des an Objekten (20) in dem Überwachungsbereich (18) remittierten oder reflektierten Lichtsignals (22) in ein Empfangssignal, einem Schaltausgang (30), an dem ein Schaltsignal ausgebbar ist, wenn das Empfangssignal ein Schaltkriterium (E) erfüllt, einem Vorausfallmeldeausgang (32), an dem ein Vorausfallmeldesignal ausgebbar ist, sowie einer Auswertungseinheit (28), die dafür ausgebildet ist, einen Verschmutzungszustand zu erkennen, der dann vorliegt, wenn von dem Empfangssignal ein Verschmutzungskriterium (V), nicht aber das Schaltkriterium (E) erfüllt ist, und eine Vorausfallmeldung auszugeben, wenn eine Verschmutzungsdauer, in welcher der Verschmutzungszustand vorliegt, länger als eine Toleranzdauer (T_{VMA,ON}) anhält und/oder wenn eine Verschmutzungszustand-Eintrittshäufigkeit, die jeweils heraufgezählt wird, wenn der Verschmutzungszustand eintritt, größer als eine Toleranzanzahl ist,
**dadurch gekennzeichnet,**
**dass** die Auswertungseinheit (28) dafür ausgebildet ist, die Verschmutzungsdauer auch über mehrere unterbrochene Phasen des Verschmutzungszustands aufzuaddieren beziehungsweise die Verschmutzungszustand-Eintrittshäufigkeit auch über Phasen hinweg zu zählen, in denen weder das Schaltkriterium (E) noch das Verschmutzungskriterium (V) erfüllt ist und dass das Schaltkriterium das Unterschreiten des Empfangssignals einer Schaltschwelle (E) und das Verschmutzungskriterium das Unterschreiten des Empfangssignals einer Verschmutzungsschwelle (V) oberhalb der Schaltschwelle (E) ist.

2. Sensor (10) nach Anspruch 1,
wobei der Verschmutzungszustand vorliegt, wenn das Empfangssignal zwischen der Schaltschwelle (E) und der Verschmutzungsschwelle (V) liegt, und wobei der Verschmutzungszustand eintritt, wenn die Verschmutzungsschwelle (V), nicht jedoch die Schaltschwelle (E) unterschritten wird, oder wenn die Schaltschwelle (E) überschritten wird, ohne die Verschmutzungsschwelle (V) zu überschreiten.

3. Sensor (10) nach einem der vorhergehenden Ansprüche,
wobei die Auswertungseinheit (28) dafür ausgebildet ist, die Vorausfallmeldung nicht mehr auszugeben, wenn über eine Rücksetzmindestdauer (T_{VMA,OFF}) weder ein Schaltsignal am Schaltausgang (30) ausgegeben wird noch der Verschmutzungszustand vorliegt.

4. Sensor (10) nach Anspruch 3,
wobei die Auswertungseinheit (28) dafür ausgebildet ist, für die Rücksetzmindestdauer (T_{VMA,OFF}) nur Phasen zu werten, in denen das Empfangssignal um mehr als einen Mindestrauschpegel (ΔU) schwankt.

5. Sensor (10) nach Anspruch 3 oder 4,
wobei die Auswertungseinheit (28) dafür ausgebildet ist, die Rücksetzmindestdauer (T_{VMA,OFF}) auch über Unterbrechungen hinweg aufzuaddieren, in denen das Schaltkriterium (E) erfüllt ist.

6. Sensor (10) nach einem der vorhergehenden Ansprüche,
der als Lichttaster ausgebildet ist, insbesondere als energetischer Reflexionstaster oder als Triangulationstaster.

7. Verfahren zum Überwachen eines Überwachungsbereichs (18), bei dem ein Lichtsignal (16) in den Überwachungsbereich (18) ausgesandt, das an Objekten (20) in dem Überwachungsbereich (18) remittierte oder reflektierte Lichtsignal (22) empfangen und in ein Empfangssignal umgewandelt wird, wobei an einem Schaltausgang (30) ein Schaltsignal ausgegeben wird, wenn das Empfangssignal ein Schaltkriterium (E) erfüllt, wobei ein Verschmutzungszustand erkannt wird, wenn das Empfangssignal ein Verschmutzungskriterium (V), nicht aber das Schaltkriterium (E) erfüllt, und wobei an einem Vorausfallmeldeausgang (32) ein Vorausfallmeldesignal ausgegeben wird, wenn eine Verschmutzungsdauer, in welcher der Verschmutzungszustand vorliegt, länger als eine Toleranzdauer (T_{VMA,ON}) anhält und/oder wenn eine Verschmutzungszustand-Eintrittshäufigkeit, die jeweils heraufgezählt wird, wenn der Verschmutzungszustand eintritt, größer als eine Toleranzanzahl ist,
**dadurch gekennzeichnet,**
**dass** die Verschmutzungsdauer auch über mehrere unterbrochene Phasen des Verschmutzungszustands aufaddiert beziehungsweise die Verschmutzungszustand-Eintrittshäufigkeit auch über Phasen hinweg gezählt wird, in denen weder das Schaltkriterium (E) noch das Verschmutzungskriterium (V) erfüllt ist und dass als Schaltkriterium das Unterschreiten des Empfangssignals einer Schaltschwelle (E) und als Verschmutzungskriterium das Unterschreiten des Empfangssignals einer Verschmutzungsschwelle (V) oberhalb der Schaltschwelle (E) erkannt wird.

8. Verfahren nach Anspruch 7,
wobei der Verschmutzungszustand vorliegt, wenn das Empfangssignal zwischen der Schaltschwelle (E) und der Verschmutzungsschwelle (V) liegt, und der Verschmutzungszustand eintritt, wenn die Verschmutzungsschwelle (V), nicht jedoch die Schaltschwelle (E) unterschritten wird, oder wenn die Schaltschwelle (E) überschritten wird, ohne die Verschmutzungsschwelle (V) zu überschreiten.

9. Verfahren nach Anspruch 7 oder 8,
wobei die Vorausfallmeldung nicht mehr ausgegeben wird, wenn über eine Rücksetzmindestdauer (T_{VMA,OFF}) weder ein Schaltsignal ausgegeben wird noch der Verschmutzungszustand vorliegt, wobei für die Rücksetzmindestdauer (T_{VMA,OFF}) nur Phasen gewertet werden, in denen das Empfangssignal um mehr als einen Mindestrauschpegel (ΔU) schwankt, und wobei insbesondere die Rücksetzmindestdauer (T_{VMA,OFF}) auch über Unterbrechungen hinweg aufaddiert wird, in denen das Schaltkriterium (E) erfüllt ist.

## Claims

1. An optoelectronic sensor (10) with a light transmitter (12) for transmitting a light signal (16) into a monitoring area (18), a light receiver (26) for receiving and converting the light signal (22) remitted or reflected from an object (20) in the monitoring area (18) into a reception signal, a switching output (30) for the output of a switching signal when the reception signal meets a switching criterion (E), a pre-failure alarm output (32) for the output of a pre-failure alarm signal, and an evaluation unit (28) configured to detect a contamination state that is present when the reception signal meets a contamination criterion (V) but not the switching criterion (E), and to output a pre-failure alarm signal when a contamination period during which the contamination state extends for more than a tolerated period (T_{VMA,ON}) and/or when a contamination state occurrence number that is incremented upon each entry of the contamination state is larger than a tolerated number,
**characterized in that**
the evaluation unit (28) is configured to add up the contamination period also across several discontinuous periods of the contamination state or to count the contamination state occurrence number also across periods during which neither the switching criterion (E) nor the contamination criterion (V) are met, respectively, and **in that** the switching criterion is the falling of the reception signal below a switching threshold (E) and the contamination criterion is the falling of the reception signal below a contamination threshold (V) greater than the switching threshold (E):

2. The sensor (10) according to claim 1,
wherein the contamination state is present when the reception signal is between the switching threshold (E) and the contamination threshold (V), and wherein the contamination state is entered when the reception signal falls below the contamination threshold (V) but not below the switching threshold (E) or when the switching threshold (E) is exceeded without exceeding the contamination threshold (V).

3. The sensor (10) according to any of the preceding claims,
wherein the evaluation unit (28) is configured to no longer output the pre-failure alarm signal when, for a reset minimum period (T_{VMA,OFF}), neither a switching signal is output at the switching output (30) nor the contamination state is present.

4. The sensor (10) according to claim 3,
wherein the evaluation unit (28) is configured to consider only periods during which the reception signal varies by more than a minimum noise level (ΔU) when testing for the reset minimum period (T_{VMA,OFF}).

5. The sensor (10) according to claim 3 or 4,
wherein the evaluation unit (28) is configured to add up discontinuous periods when testing for the reset minimum period (T_{VMA, OFF}) also across discontinuities during which the switching criterion (E) is met.

6. The sensor (10) according to any of the preceding claims,
wherein the sensor (10) is made as an optical light sensor of the scanning type without a cooperative target, in particular a light sensor based on received intensity or a triangulation light sensor.

7. A method for monitoring a monitoring area (18),
wherein a light signal (16) is transmitted into the monitoring area (18), the light signal (22) is remitted or reflected from objects (20) in the monitoring area (18) and is received and converted into a reception signal, wherein a switching signal is output at a switching output (30) when the reception signal meets a switching criterion (E), wherein a contamination state is detected when the reception signal meets a contamination criterion (V) but not the switching criterion (E), and wherein a pre-failure alarm signal is output at a pre-failure alarm output (32) when a contamination period during which the contamination state is present extends for more than a tolerated period (T_{VMA,ON}) and/or when a contamination state occurrence number that is incremented upon each entry of the contamination state is larger than a tolerated number,
**characterized in that**
the contamination period is added up also across several discontinuous periods of the contamination state or that the contamination state occurrence number is counted also across periods during which neither the switching criterion (E) nor the contamination criterion (V) are met, respectively, and **in that** the falling of the reception signal below a switching threshold (E) is detected as the switching criterion and the falling of the reception signal below a contamination threshold (V) greater than the switching threshold (E) is detected as the contamination criterion.

8. The method according to claim 7,
wherein the contamination state is present when the reception signal is between the switching threshold (E) and the contamination threshold (V), and wherein the contamination state is entered when the reception signal falls below the contamination threshold (V) but not below the switching threshold (E), or when the switching threshold (E) is exceeded without exceeding the contamination threshold (V).

9. The method according to claim 7 or 8,
wherein the pre-failure alarm signal is no longer output when, for a reset minimum period (T_{VMA,OFF}), neither a switching signal is output nor the contamination state is present, wherein only periods during which the reception signal varies by more than a minimum noise level (ΔU) are considered when testing for the reset minimum period (T_{VMA,OFF}), and wherein in particular the reset minimum period (T_{VMA, OFF}) is also added up across discontinuities during which the switching criterion (E) is met.

## Revendications

1. Capteur optoélectronique (10) comprenant un émetteur de lumière (12) pour émettre un signal lumineux (16) dans une zone de surveillance (18), un récepteur de lumière (26) pour recevoir et convertir le signal lumineux (22) réémis ou réfléchi sur des objets (20) dans la zone de surveillance (18) en un signal de réception, une sortie de commutation (30) à laquelle peut être délivré un signal de commutation quand le signal de réception satisfait un critère de commutation (E), une sortie de signalisation préalable de défaillance (32) à laquelle peut être délivré un signal de signalisation préalable de défaillance, et une unité d'évaluation (28) qui est réalisée pour reconnaître un état d'encrassement, qui se présente quand le signal de réception satisfait un critère d'encrassement (V) mais non pas le critère de commutation (E), et pour délivrer une signalisation préalable de défaillance quand une durée d'encrassement dans laquelle l'état d'encrassement se présente dure plus longtemps qu'une durée de tolérance (T_{VMA,ON}) et/ou quand une fréquence d'apparition d'état d'encrassement, qui est incrémentée à chaque fois que l'état d'encrassement se produit, est supérieure à un nombre de tolérance,
**caractérisé en ce que**
l'unité d'évaluation (28) est réalisée pour additionner la durée d'encrassement également sur plusieurs phases interrompues de l'état d'encrassement, ou respectivement pour compter la fréquence d'apparition d'états d'encrassement également sur des phases dans lesquelles ni le critère de commutation (E) ni le critère d'encrassement (V) ne sont satisfaits, et **en ce que** le critère de commutation est le passage du signal de réception au-dessous d'un seuil de commutation (E), et le critère d'encrassement est le passage du signal de réception au-dessous d'un seuil d'encrassement (V) au-dessus du seuil de commutation (E).

2. Capteur (10) selon la revendication 1,
dans lequel l'état d'encrassement se présente quand le signal de réception se trouve entre le seuil de commutation (E) et le seuil d'encrassement (V), et l'état d'encrassement se produit lorsqu'on passe au-dessous du seuil d'encrassement (V) mais non pas au-dessous du seuil de commutation (E), ou quand on dépasse le seuil de commutation (E) sans dépasser le seuil d'encrassement (V).

3. Capteur (10) selon l'une des revendications précédentes,
dans lequel l'unité d'évaluation (28) est réalisée pour ne plus délivrer la signalisation préalable de défaillance si, sur une durée minimum de remise à zéro (T_{VMA,OFF}) un signal de commutation n'est pas délivré à la sortie de commutation (30) et l'état d'encrassement ne se présente pas.

4. Capteur (10) selon la revendication 3,
dans lequel l'unité d'évaluation (28) est réalisée pour ne tenir compte, pendant la durée minimum de remise à zéro (T_{VMA,OFF}) que des phases dans lesquelles le signal de réception varie de plus d'un niveau de bruit minimum (ΔU).

5. Capteur (10) selon la revendication 3 ou 4,
dans lequel l'unité d'évaluation (28) est réalisée pour additionner la durée minimum de remise à zéro (T_{VMA,OFF}) également au-delà d'interruptions dans lesquelles le critère de commutation (E) est satisfait.

6. Capteur (10) selon l'une des revendications précédentes, réalisé à titre de détecteur de lumière, en particulier à titre de détecteur de réflexion énergétique ou à titre de détecteur de triangulation.

7. Procédé pour surveiller une zone de surveillance (18), dans lequel un signal lumineux (16) est émis dans la zone de surveillance (18), le signal lumineux réémis ou réfléchi (22) sur des objets (20) dans la zone de surveillance (18) est reçu et converti en un signal de réception, dans lequel un signal de commutation est délivré à une sortie de commutation (30) quand le signal de réception satisfait un critère de commutation (E), et l'on reconnaît un état d'encrassement quand le signal de réception satisfait un critère d'encrassement (V), mais non pas le critère de commutation (E), et un signal d'indication préalable de défaillance est délivré à une sortie d'indication préalable de défaillance (32) quand une durée d'encrassement dans laquelle se présente l'état d'encrassement dure plus longtemps qu'une durée de tolérance (T_{VMA,ON}) et/ou quand une fréquence d'apparition d'état d'encrassement, qui est à chaque fois incrémentée quand l'état d'encrassement apparaît, est supérieure à un nombre de tolérances,
**caractérisé en ce que** la durée d'encrassement est additionnée également sur plusieurs phases interrompues de l'état d'encrassement, ou respectivement la fréquence d'apparition d'états d'encrassement est également comptée sur des phases dans lesquelles ni le critère de commutation (E) ni le critère d'encrassement (V) n'est satisfait, et **en ce que** l'on reconnaît comme critère de commutation le passage du signal de réception au-dessous d'un seuil de commutation (E), et comme critère d'encrassement le passage du signal de réception au-dessous d'un seuil d'encrassement (V) au-dessus du seuil de commutation (E).

8. Procédé selon la revendication 7,
dans lequel l'état d'encrassement se présente quand le signal de réception tombe entre le seuil de commutation (E) et le seuil d'encrassement (V), et l'état d'encrassement apparaît quand on passe au-dessous du seuil d'encrassement (V) mais non pas au-dessous du seuil de commutation (E), ou bien quand l'on passe au-dessus du seuil de commutation (E) sans dépasser le seuil d'encrassement (V).

9. Procédé selon la revendication 7 ou 8,
dans lequel la signalisation préalable de défaillance n'est plus délivrée quand, sur une durée minimum de remise à zéro (T_{VMA,OFF}) un signal de commutation n'est pas délivré et l'état d'encrassement ne se présente pas, et pour la durée minimum de remise à zéro (T_{VMA,OFF}) on ne tient compte que des phases dans lesquelles le signal de réception varie de plus d'un niveau de bruit minimum (ΔU), et la durée minimum de remise à zéro (T_{VMA,OFF}) est également additionnée au-delà d'interruptions dans lesquelles le critère de commutation (E) est satisfait.
